# EUROPÄISCHE PATENTANMELDUNG

(11) **EP 3 610 992 A1**
(43) Veröffentlichungstag der Anmeldung: **19.02.2020**
(21) Anmeldenummer: 18188655.7
(22) Anmeldetag: 13.08.2018
(51) Int. Cl.: B25F 5/02, F16B 41/00

(54) **BAUGRUPPE MIT VERLIERSICHERER SCHRAUBE**

(71) Anmelder: Hilti Aktiengesellschaft, 9494 Schaan (LI)
(72) Erfinder: Britz, Rory, 86807 Buchloe (DE)
(74) Vertreter: Hilti Aktiengesellschaft Corporate Intellectual Property

(57) **Zusammenfassung**

Die erfindungsgemäße Baugruppe **1** hat eine Schraube **4,** ein Oberteil und ein Unterteil. Das Oberteil hat eine Oberseite **17,** ein durch die Oberseite **17** verlaufendes erstes Loch **23** zum Durchstecken der Schraube **4.** Ein hohler Durchmesser des ersten Lochs **23** ist größer als ein Durchmesser des Schraubenhalses **8.** Das Oberteil **3** hat einen von der Oberseite **17** axial vorstehenden Kragen **24,** welcher um das erste Loch **23** angeordnet ist und ein äußerer Durchmesser des Kragens **24** ist gleich oder kleiner dem Durchmesser des Schraubenkopfs **7.**

## Beschreibung

### GEBIET DER ERFINDUNG

Die Erfindung betrifft eine Baugruppe mit einer verliersicheren Schraube.

Bei Handwerkzeugmaschinen werden Verschraubungen zum Verbinden von Gehäuseschalen, Befestigen von Abdeckungen, Verbinden von Baugruppen verwendet. Manche der Verschraubungen sind zum Wiederöffnen vorgesehen. Beispielsweise kann zum Wechseln von Kohlebürsten eines Elektromotors eine Abdeckung abgeschraubt werden. Problematisch ist dabei, dass die gelöste Schrauben leicht verloren gehen können und ein Ersatz nicht unbedingt sofort zur Verfügung steht.

### OFFENBARUNG DER ERFINDUNG

Die erfindungsgemäße Baugruppe sichert ihre Schrauben nachdem diese das erste Mal angezogen wurden. Die Baugruppe benötigt nur die Schraube und die beiden zu verbindenden Teile, welche nachfolgend als Oberteil und Unterteil bezeichnet werden. Die Komplexität der erstmaligen Montage bei der Fabrikation der Baugruppe wird nicht durch zusätzliche Sicherungselement erhöht.

Die erfindungsgemäße Baugruppe hat eine Schraube, ein Oberteil und ein Unterteil. Die Schraube hat einen Schraubenkopf, einen Schraubenhals und ein Schraubengewinde. Das Oberteil hat eine Oberseite, ein durch die Oberseite verlaufendes erstes Loch zum Durchstecken der Schraube. Ein hohler Durchmesser des ersten Lochs ist größer als ein Durchmesser des Schraubenhalses. Das Unterteil hat ein zweites Loch zum Aufnehmen und Verschrauben der Schraube aufweist. Das Oberteil hat einen von der Oberseite axial vorstehenden Kragen, welcher um das erste Loch angeordnet ist und ein äußerer Durchmesser des Kragens ist gleich oder kleiner dem Durchmesser des Schraubenkopfs.

Bei dem erfindungsgemäßen Verfahren zum Verschrauben der Baugruppe wird das Oberteil auf das Unterteil aufgelegt, wobei das erste Loch des Oberteils in einer Achse liegend mit dem zweiten Loch des Unterteils ausgerichtet wird. Die Schraube wird durch das erste Loch in das zweite Loch gesteckt. Die Schraube wird in einem Schraubdom des Unterteils verschraubt. Beim Anziehen der Schraube wird der axial vorstehende Kragen in einen radial in das erste Loch vorstehenden Wulst plastisch umgeformt. Der Durchmesser des ersten Lochs wird dabei zu klein, als dass die Schraube wieder aus dem Loch herausgezogen werden könnte.

Der Kragen ist kein separates Teil, sondern stoffschlüssig bzw. aus dem gleichen Material wie das Oberteil.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: Ausschnitt einer Baugruppe vor erstmaliger Verschraubung
- Fig. 2: Draufsicht auf das Oberteil vor erstmaliger Verschraubung
- Fig. 3: Ausschnitt einer Detailansicht der Baugruppe in verschraubten Zustand
- Fig. 4: Ausschnitt der Baugruppe bei gelöster Verschraubung
- Fig. 5: einen Bohrhammer

Gleiche oder funktionsgleiche Elemente werden durch gleiche Bezugszeichen in den Figuren indiziert, soweit nicht anders angegeben. Ein Durchmesser bezeichnet den Außendurchmesser soweit nicht anders angegeben.

### AUSFÜHRUNGSFORMEN DER ERFINDUNG

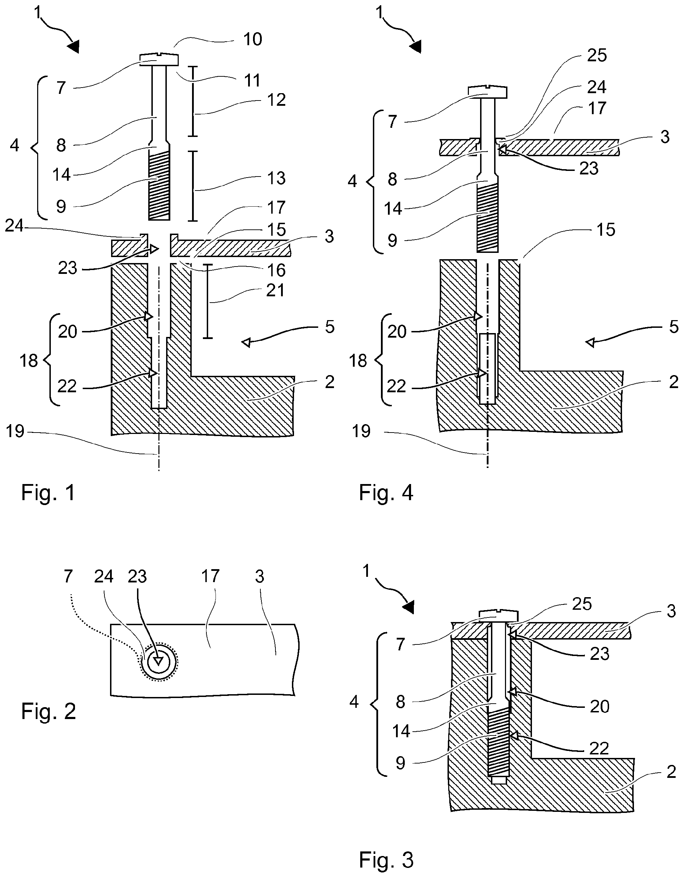

Eine Baugruppe **1** beinhaltet ein Unterteil **2,** ein auf dem Unterteil **2** zu befestigendes Oberteil **3** und eine Schraube **4,** welche das Oberteil **3** an dem Unterteil **2** befestigt. Das Unterteil **2** ist beispielsweise ein Gehäuse mit einem Hohlraum **5,** das Oberteil **3** ist eine Abdeckung für den Hohlraum **5.** Eine beispielhafte Baugruppe **1** für eine Handwerkzeugmaschine **6** wird unter Bezug auf Fig. 1 vor einem erstmaligen Verschrauben, Fig. 3 im verschraubten Zustand und Fig. 4 nach Öffnen der Verschraubung beschrieben. Von der Baugruppe **1** ist nur ein Ausschnitt des Unterteils **2** und des Oberteils **3** dargestellt. Ferner kann die Baugruppe **1** mehr als eine Schraube **4** enthalten. Die Verschraubung der Baugruppe **1** lässt sich mit einem Schraubwerkzeug lösen, wodurch das Oberteil **3** von dem Unterteil **2** vollständig abgenommen werden kann. Die Schraube **4** bleibt jedoch in dem Oberteil **3** gefangen. Die Schraube **4** kann nur mit Gewalt und unter Zerstören des Oberteils 3 von diesem entfernt werden. Das Risiko eines Verlierens der Schraube **4** ist auf diese Weise effektiv verringert.

Die Schraube **4** hat einen Schraubenkopf **7,** einen Schraubenhals **8** und ein Schraubengewinde **9.** Eine Oberseite **10** oder ein Umfang des Schraubenkopfs **7** ist derart gestaltet, dass ein Schraubwerkzeug formschlüssig in den Schraubenkopf **7** eingreifen oder den Schraubenkopf **7** formschlüssig umgreifen kann. Beispiele für einen Schraubenkopf **7** enthalten einen Schlitz, Kreuzschlitz, Torx, etc. an der Oberseite **10** und/oder weisen einen hexagonalen Umfang auf. Eine Unterseite **11** des Schraubenkopfs **7** ist vorzugsweise eben. Die Unterseite **11** liegt im montierten Zustand an dem Oberteil **3** an. Ein Durchmesser des Schraubenkopfs **7** ist größer als ein Durchmesser des Schraubenhalses **8** und typischerweise auch größer als ein Durchmesser des Schraubengewindes **9.**

Das Schraubengewinde **9** kann schneidend, furchend oder für ein vorgeschnittenes Gewinde ausgelegt sein. In der dargestellten Ausführung ist ein Durchmesser des Schraubengewindes **9** größer als der Durchmesser des Schraubenhalses **8.** Eine Länge des Schraubengewindes **9** kann entsprechend einer aufzubringender Zugbelastung durch die Schraube **4** ausgelegt werden.

Der Schraubenhals **8** ist zwischen dem Schraubenkopf **7** und dem Schraubengewinde **9** angeordnet. Der Schraubenhals **8** ist ein im wesentlichen zylindrischer Abschnitt. Eine Länge **12** des Schraubenhalses **8** ist vorzugsweise gleich oder größer als die Länge **13** des Schraubengewindes **9.**

Beidseitig des Schraubenhalses **8** hat die Schraube **4** Abschnitte, deren Durchmesser größer als der Durchmesser des Schraubenhals **8** sind. In dem dargestellten Beispiel sind diese beiden Abschnitte der Schraubenkopf **7** und das Schraubengewinde **9.** Der Schraubenkopf **7** schließt sich vorzugsweise unmittelbar an den Schraubenhals **8** an. Zwischen dem Schraubenhals **8** und dem Schraubengewinde **9** ist vorzugsweise eine Schulter **14** vorgesehen. Die Schulter **14** kann zylindrisch, konisch oder beliebiger anderer rotationssymmetrischer Gestalt sein. Die Schulter **14** hat kein Gewinde, insbesondere kein schneidendes oder furchendes Gewinde. Ein Durchmesser der Schulter **14** ist größer als der Durchmesser des Schraubenhalses **8.** Ein Durchmesser des Schraubengewindes **9** kann gleich, größer oder kleiner als der Durchmesser der Schulter **14** sein.

Das Unterteil **2** hat eine Oberseite **15,** an welcher eine Unterseite **16** des Oberteils **3** anliegt. Das Oberteil **3** hat eine Oberseite **17,** welche von der Unterseite **16** abgewandt ist. Typischerweise sind Unterseite **16** und Oberseite **17** zumindest nahe des Verschraubungsbereichs zueinander parallel. Die Bezeichnungen "ober" und "unter" sind in Bezug auf die Richtung mit welcher die Schraube **4** eingesetzt wird gewählt und sind nicht einschränkend hinsichtlich einer Orientierung des Unterteils im Raum zu interpretieren. Ferner kann das Oberteil **3** an mehreren Seiten des Unterteils anliegen, z.B. wenn das Oberteil **3** gewinkelt ist.

Das Unterteil **2** weist ein durch die Oberseite **15** verlaufendes Loch **18** auf, in welchem die Schraube **4** teilweise aufgenommen wird. Das Loch **18** erstreckt sich längs einer Achse **19.** Das Loch **18** hat längs der Achse **19** einen gestuften Durchmesser.

Ein erster, an die Oberseite **15** angrenzender Abschnitt **20** ist derart ausgelegt, dass das Schraubengewinde **9** in den ersten Abschnitt **20** vollständig eingelegt werden kann. Das Schraubengewinde **9** kann in dem ersten Abschnitt **20** längs der Achse **19** frei verschoben werden, d.h. ohne Kraftaufwand und ohne notwendigerweise das Schraubengewinde **9** dabei um die Achse **19** zu drehen. Das Schraubengewinde **9** kann durch den ersten Abschnitt **20** geführt sein. Das Schraubengewinde **9** greift jedoch nicht in die Wandung des ersten Abschnitts **20.** Ein hohler Querschnitt des ersten Abschnitts **20** ist entsprechend gleich oder größer als der Querschnitt des Schraubengewindes **9.** Falls die Schulter **14** an der Schraube **4** vorgesehen ist, ist der hohle Querschnitt sinngemäß größer als der größere der beiden Querschnitte von Schraubengewinde **9** und Schulter **14.** Der hohle Querschnitt kann kreisförmig, elliptisch, quadratisch, rechteckig oder anderer Gestalt sein. Typischerweise hat der erste Abschnitt **20** einen entlang der Achse **19** gleichbleibenden hohlen Querschnitt. Eine Länge **21** des ersten Abschnitts **20** ist gleich oder etwas größer als die Länge **13** des Schraubengewindes **9.**

Ein zweiter, von der Oberseite **15** entfernter Abschnitt **22** wird nachfolgend als Schraubdom **22** bezeichnet. Der Schraubdom **22** ist für die Verschraubung der Schraube **4** mit dem Unterteil **2** ausgelegt. Der Schraubdom **22** kann mit einem vorgeschnittenen Innengewinde für das Schraubengewinde **9,** für ein furchendes Schraubengewinde **9,** für ein schneidendes Schraubengewinde **9,** etc. ausgelegt sein. Im Gegensatz zu dem ersten Abschnitt **20** greift das Schraubengewinde **9** in die Wandung des Schraubdoms **22** ein und lässt sich nicht längs der Achse **19** frei verschieben. Ein hohler Querschnitt des Schraubdoms **22** ist geringer als der Querschnitt des Schraubengewindes **9** und demzufolge geringer als der hohle Querschnitt des ersten Abschnitts **20.** Eine Länge des Schraubdoms **22** kann gleich oder größer als die Länge **13** des Schraubengewindes **9** sein. In anderen Ausführungen kann der Schraubdom **22** kürzer sein, wenn sich an den Schraubdom **22** ein weiterer Hohlraum oder eine Öffnung **5** anschließt, in welche ein Teil des Schraubengewindes **9** ragen kann.

Das Oberteil **3** hat ein durchgängiges Loch **23** (Auge) von der Oberseite **17** bis zu der Unterseite **16.** Das Auge **23** hat einen hohlen Querschnitt der geringer als der Durchmesser des Schraubenkopfs **7** und größer als der größte Querschnitt der anderen Abschnitte der Schraube **4,** z.B. des Schraubengewindes **9,** ist. Der hohle Querschnitt ist größer als der Querschnitt des Schraubenhalses **8.** Das Auge **18** ist typischerweise hohlzylindrisch. Die Schraube **4** kann soweit durch das Auge **23** gesteckt werden, bis die Unterseite **11** des Schraubenkopfs **7** an dem Oberteil **3** zum Anliegen kommt.

Das Oberteil **3** hat in axialer Verlängerung des Auges **23** einen von der Oberseite **17** vorstehenden Kragen **24.** Der Kragen **24** ist um das Auge **23** angeordnet. Der Kragen **24** ist vorzugsweise ringförmig geschlossen ausgebildet. Ein Innendurchmesser des Kragens **24** ist kleiner als der Durchmesser des Schraubenkopfs **7.** Der Innendurchmesser ist aber größer als der größte Querschnitt der anderen Abschnitte der Schraube **4,** z.B. des Schraubengewindes **9.** Die Schraube **4** kann somit durch den Kragen **24** und das Loch **18** gesteckt werden, bis die Unterseite **11** des Schraubenkopfs **7** an dem Kragen **24** zum Anliegen kommt. Ein Außendurchmesser des Kragens **24** ist vorzugsweise gleich oder geringer als der Durchmesser des Schraubenkopfs **7,** welcher in Fig. 2 gestrichelt dargestellt ist.

Eine Höhe des Kragens **24** ist derart gewählt, dass beim Anziehen des Schraube **4** die Elastizitätsgrenze des Materials überschritten ist, wenn der Schraubenkopf **7** auf der Oberseite **17** des Oberteils **3** anliegt. Eine mittlere Dicke des Oberteils 3 abseits des Kragens **24** liegt typischerweise im Bereich von 1,5 mm bis 3 mm. Die Höhe des Kragens **24** entspricht 25 % bis 50 % der Dicke des Oberteils **3.**

Der Kragen **24** ist an die Oberseite **17** des Oberteils **3** angeformt. Zwischen dem Kragen **24** und dem Oberteil **3** gibt es keine Grenzfläche oder Nahtfläche. Der Kragen **24** besteht aus dem gleichen Material wie das Oberteil **3,** zumindest aus dem gleichen Material wie die Oberseite **17** des Oberteils **3.** Der Kragen **24** kann aus einem Polymer oder einem Metall bestehen.

Die Baugruppe **1** mit dem Unterteil **2** und dem Oberteil **3** können durch die eine Schraube **4** oder mehrere dieser Schrauben miteinander verbunden werden. Fig. 3 zeigt die Baugruppe **1** in dem verschraubten Zustand. Für das Verschrauben werden das Loch **18** des Unterteils **2** und das Auge **23** des Oberteils **3** entlang der Achse **19** aneinander ausgerichtet. Die Schraube **4** wird durch das Auge **23** in das Loch **18** gesteckt. Mit einem Schraubwerkzeug wird die Schraube **4** in dem Schraubdom **22** eingeschraubt. Der Schraubenkopf **7** senkt sich dabei auf die Oberseite **17** des Oberteils 3 ab. Der Kragen **24** ist so weich ausgebildet, dass die von der Schraube **4** aufgebrachte Zugkraft zu einem plastischen Verformen des Kragens **24** führt. Das Material des Kragens **24** fließt zumindest teilweise in das Auge **23.** Ein Wulst **25** entsteht in dem Auge **23.** Der Wulst **25** verringert den Durchmesser des Auges **23** in einem Bereich angrenzend an die Oberseite **17.** Die geometrische Gestalt des Wulstes **25** in Richtung zu der Oberseite **17** und in radialer Richtung sind im Wesentlichen durch den Schraubenkopf **7** und den Schraubenhals **8** vorgegeben. Der Wulst **25** hat eine ringförmige Gestalt, deren hohler Innendurchmesser dem Durchmesser des Schraubenhalses **8** entspricht. Eine Unterseite des Wulstes **25** ist typischerweise uneben. Ferner kann die Unterseite des Wulstes, und damit der Wulst **25** an sich, eine nicht-rotationssymmetrische Gestalt aufweisen. Das Volumen des Kragens **24** ist vorzugsweise derart gewählt, dass der sich aus dem Kragen **24** bildende Wulst **25** nur über einen Teil der Höhe des Auges **23** erstreckt, beispielsweise über weniger als 75 %, weniger als 50 %, weniger als 25 % der Höhe des Auges **23.** Die Höhe bezeichnet die Abmessung längs der Achse **19.**

Die Verschraubung kann mit einem Schraubwerkzeug gelöst werden. Das Schraubengewinde **9** wird aus dem vorgeschnittenen oder nun gefurchten bzw. geschnittenen Innengewinde herausgedreht, bis das Schraubengewinde **9** nicht mehr in Eingriff ist. Der Schraubenkopf **7** kann sich dabei von der Oberseite **17** lösen. Der Schraubenhals **8** kann vorzugsweise längs der Achse **19** in dem Auge **23** verschoben werden. Das Oberteil **3** kann nun von dem Unterteil **2** abgezogen werden (Fig. 4). Die Schraube **4** lässt sich jedoch nicht von dem Oberteil **3** entfernen. Das Schraubengewinde **9** kann nicht mehr durch das verjüngte Auge **23** herausgezogen werden. Der Wulst **25** ist beständig und bildet sich nicht zurück. Das Material des vormaligen Kragens **24** ist plastisch verformt.

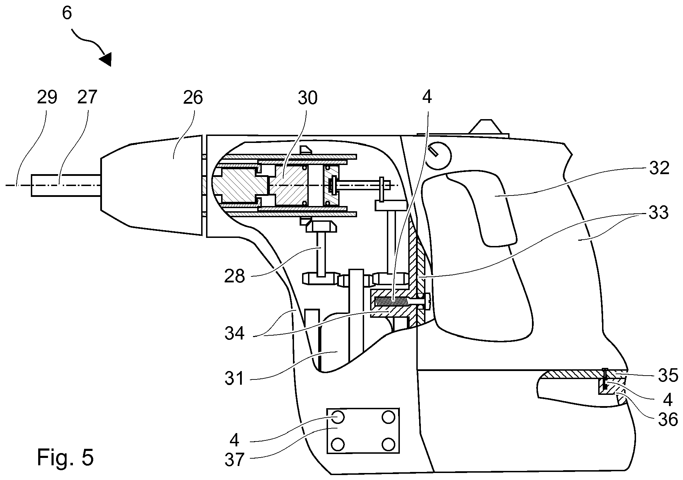

Zweckmäßigerweise lässt sich der Schraubenhals **8** in der dem Auge **23** über seine gesamte Länge **12** verschieben, wodurch gewährleistet ist, dass bei mehreren Schrauben **4** diese einzeln herausgeschraubt und später auch wieder einzeln eingeschraubt werden können. Fig. 5 zeigt als Beispiel einer handgeführten Handwerkzeugmaschine mit der Baugruppe **1** schematisch einen Bohrhammer **6.** Der beispielhafte Bohrhammer **6** hat einen Werkzeughalter **26,** in welchen ein Werkzeug **27** eingesetzt und verriegelt werden kann. Das Werkzeug **27** ist beispielsweise ein Bohrer, ein Meißel, etc.. Die beispielhaft dargestellt Ausführungsform dreht den Werkzeughalter **26** mit einem Drehantrieb **28** um eine Arbeitsachse **29** und übt zugleich periodisch Schläge auf das Werkzeug längs der Arbeitsachse **29** mittels eines pneumatischen Schlagwerks **30** aus. Der Drehantrieb **28** und das Schlagwerk **30** werden vorzugsweise von einem Elektromotor **31** angetrieben. Der Anwender kann die Handwerkzeugmaschine **6** mit einem Betriebstaster **32** in Betrieb nehmen, d.h. den Elektromotor **31** einschalten. Die Handwerkzeugmaschine **6** hat einen Handgriff **33.** Der Anwender kann die Handwerkzeugmaschine **6** während des Betriebs mit dem Handgriff **33** halten und führen. Vorzugsweise ist der Betriebstaster **32** an dem Handgriff **33** derart angebracht, dass der Anwender den Betriebstaster **32** mit der den Handgriff **33** greifenden Hand betätigen kann.

Die Handwerkzeugmaschine **6** hat Gehäusekomponenten, welche in Form der Baugruppe **1** miteinander verbunden sind. Beispiele für die Paarung Unterteil **2** - Oberteil **3** sind Gehäuse **34** - Handgriff **33,** Getriebeblock - Gehäuse **34,** Batterieschale **35** - Batteriedeckel **36,** linke Gehäuseschale - rechte Gehäuseschale, Motorraum - Luke **37** für Zugriff zum Motorraum. Die Verschraubung dient der Fixierung des Oberteils **3** auf dem Unterteil **2.** Oberteil **3** und Unterteil **2** können ferner beweglich zueinander durch eine Lasche, etc. verbunden sein.

Die Verwendung der verlustsicheren Verschraubung in dem dargestellten Bohrhammer ist beispielhaft. Andere Handwerkzeugmaschinen umfassen Elektroschrauber, Bohrmaschinen, Meißelhämmer, Kreissägen, Stichsägen, Pendelhubsägen, Trennschleifer, Setzgeräte, etc.. Der Werkzeughalter überträgt auf das Werkzeug je nach Antriebsstrang eine kontinuierlich drehende Bewegung, eine pulsartig drehende Bewegung, eine axial schlagende Bewegung, eine pendelnde Bewegung oder eine Überlagerung der genannten Bewegungen. Der Antrieb kann einen Elektromotor, Verbrennungsmotor, oder andere Konzepte zum Bewegen eines Werkzeugs oder Verbrauchsmaterials beinhalten.

## Patentansprüche

1. Baugruppe (1) mit
einer Schraube (4), die einen Schraubenkopf (7), einen Schraubenhals (8) und ein Schraubengewinde (9) aufweist,
einem Oberteil (3), das eine Oberseite (17), ein durch die Oberseite (17) verlaufendes erstes Loch (23) zum Durchstecken der Schraube (4) aufweist, wobei ein hohler Durchmesser des ersten Lochs (23) größer als ein Durchmesser des Schraubenhalses (8) ist,
einem Unterteil (2), das ein zweites Loch (18) zum Aufnehmen und Verschrauben der Schraube (4) aufweist, **dadurch kennzeichnet, dass**
das Oberteil (3) einen von der Oberseite (17) axial vorstehenden Kragen (24) aufweist, welcher um das erste Loch (23) angeordnet ist und ein äußerer Durchmesser des Kragens (24) gleich oder kleiner dem Durchmesser des Schraubenkopfs (7) ist.

2. Baugruppe (1) nach Anspruch 1, **dadurch kennzeichnet, dass** das Oberteil (3) und der Kragen (24) aus dem gleichen Material sind.

3. Baugruppe (1) nach Anspruch 2, **dadurch kennzeichnet, dass** das Oberteil (3) und der Kragen (24) aus einem Polymer sind.

4. Baugruppe (1) nach einem der vorhergehenden Ansprüche, **dadurch gekennzeichnet, dass**, der Kragen (24) stoffschlüssig mit dem Oberteil (3) verbunden ist.

5. Baugruppe (1) nach einem der vorhergehenden Ansprüche, **dadurch kennzeichnet, dass** der Durchmesser des ersten Lochs (23) an ein einer an den Schraubenkopf (7) angrenzenden Seite (17) geringer als der Durchmesser des ersten Lochs (23) an einer von dem Schraubenkopf (7) abgewandten Seite (16) des Oberteils (3) ist.

6. Baugruppe (1) nach einem der vorhergehenden Ansprüche, **dadurch gekennzeichnet, dass**, **dadurch kennzeichnet, dass** ein mit dem Oberteil (3) stoffschlüssiger verbundener Wulst (25) den Durchmesser des ersten Lochs (23) verringert.

7. Handwerkzeugmaschine (6) mit einer Baugruppe (1) nach einem der vorhergehenden Ansprüche.

8. Verfahren zum Verschrauben einer der Baugruppen nach den vorhergehenden Ansprüchen mit den Schritten:
Auflegen eines Oberteils (3) auf das Unterteil (2), wobei das erste Loch (23) des Oberteils (3) in einer Achse (19) liegend mit dem zweiten Loch (18) des Unterteils (2) ausgerichtet wird,
Durchstecken der Schraube (4) durch das erste Loch (23) in das zweite Loch (18),
Verschrauben der Schraube (4) in einem Schraubdom (22) des Unterteils (2),
Anziehen der Schraube (4), wobei der axial vorstehende Kragen (24) in einen radial in das erste Loch (23) vorstehenden Wulst (25) plastisch umgeformt wird.
